# FASCICULE DE BREVET EUROPEEN

(11) **EP 1 985 871 B1**
(45) Date de publication et mention de la délivrance du brevet: **29.03.2017**
(21) Numéro de dépôt: 08103503.2
(22) Date de dépôt: 11.04.2008
(51) Int. Cl.: F16B 2/24, F16B 5/06

(54) **Système de fixation de deux pièces l'une sur l'autre**
Befestigungssystem von zwei Teilen aufeinander
System for attaching two parts to one another

(30) Priorité: 26.04.2007 FR 0754713
(43) Date de publication de la demande: 29.10.2008
(73) Titulaire: Attax, 78420 Carrières sur Seine (FR)
(72) Inventeur: Dubost, Dominique, 78170 La Celle St Cloud (FR)
(74) Mandataire: Lavoix

(56) Documents cités:
- EP-A- 1 760 328
- US-A1- 2004 016 087

## Description

La présente invention concerne un système de fixation de deux pièces l'une sur l'autre.

Plus particulièrement l'invention concerne un tel système de fixation comportant une attache élastique présentant la forme générale d'un V comportant une portion intermédiaire en forme de pince à deux branches, adaptée pour recevoir au moins une partie en saillie de la première pièce et à partir des branches de laquelle s'étendent des ailes latérales munies de moyens d'accrochage à franchissement de point dur sur un bord correspondant de la seconde pièce afin d'accrocher les pièces l'une sur l'autre et au niveau de la zone de jonction de chaque aile latérale et de la branche correspondante de la portion intermédiaire, au moins une découpe en forme de harpon s'étendant dans le prolongement de l'aile correspondante en direction de la portion intermédiaire, pour permettre de bloquer la portion intermédiaire de l'attache sur la première pièce.

Le document EP-A- 1 760 328 décrit une attache élastique pour la fixation de deux pièces l'une sur l'autre.

Le document US 2004/0016087 A1 décrit une attache élastique.

De telles attaches élastiques trouvent de nombreuses applications, en particulier dans l'industrie automobile, pour assurer la fixation de deux pièces d'équipement d'un véhicule l'une sur l'autre.

Dans l'état de la technique, lors du montage des pièces l'une sur l'autre, l'attache est tout d'abord engagée sur la partie en saillie de la première pièce de manière à assurer l'accrochage de l'attache sur cette partie en saillie.

Ensuite, cette première pièce et cette attache sont engagées par exemple dans une lumière de la seconde pièce de manière à assurer l'accrochage de l'attache et donc de la première pièce sur la seconde pièce.

On conçoit cependant qu'une telle structure présente un certain nombre d'inconvénients notamment au niveau des opérations de montage et de démontage successives et de l'ajustement des pièces l'une par rapport à l'autre.

En effet, différents jeux de montage peuvent se traduire par le fait que les pièces ne sont pas parfaitement ajustées l'une à l'autre.

Le but de l'invention est donc de résoudre ces problèmes.

A cet effet, l'invention a pour objet un ensemble comprenant deux pièces et un système de fixation des deux pièces l'une sur l'autre comportant une attache élastique présentant la forme générale d'un V comportant une portion intermédiaire en forme de pince à deux branches, adaptée pour recevoir au moins une partie en saillie de la première pièce et à partir des branches de laquelle s'étendent des ailes latérales munies de moyens d'accrochage à franchissement de point dur sur un bord correspondant de la seconde pièce afin d'accrocher les pièces l'une sur l'autre et au niveau de la zone de jonction de chaque aile latérale et de la branche correspondante de la portion intermédiaire, au moins une découpe en forme de harpon s'étendant dans le prolongement de l'aile correspondante en direction de la portion intermédiaire, pour permettre de bloquer la portion intermédiaire de l'attache sur la première pièce, caractérisé en ce que les moyens d'accrochage des ailes latérales de l'attache comprennent des moyens de montage par encliquetage élastique de celle-ci sur le bord correspondant de la seconde pièce, permettant d'engager plus ou moins profondément la partie en saillie de la première pièce dans la portion intermédiaire en forme de pince de l'attache lors de son montage, pour ajuster le montage des deux pièces l'une par rapport à l'autre.

Suivant des modes de réalisation particuliers, le système comporte l'une ou plusieurs des caractéristiques suivantes, prise(s) isolément ou selon toutes les combinaisons techniquement possibles :
- les découpes en forme de harpon sont réalisées par des découpes inclinées à partir des ailes latérales de l'attache,
- elle comporte des ailes latérales symétriques à partir des branches de la portion intermédiaire,
- chaque aile latérale présente, à partir de la portion intermédiaire de l'attache, une portion inclinée vers l'extérieur de l'attache, une portion inclinée vers l'intérieur de l'attache, une portion de réception du bord correspondant de la seconde pièce et une portion de butée,
- les extrémités des ailes latérales de l'attache comportent des surfaces de butée adaptées pour venir en appui l'une contre l'autre en position de montage de l'attache sur la seconde pièce,
- la première pièce comporte deux parties en saillie espacées et parallèles l'une à l'autre et adaptées pour s'engager de part et d'autre des surfaces de butée des extrémités des ailes latérales de l'attache et entre les découpes en forme de harpon de la portion intermédiaire de cette attache,
- l'attache est réalisée par découpe et déformation d'un flan de tôle.

L'invention sera mieux comprise à l'aide de la description qui va suivre, donnée uniquement à titre d'exemple et faite en se référant aux dessins annexés sur lesquels :
- la figure 1 représente une vue en perspective d'une attache entrant dans la constitution d'un système selon l'invention ; et
- les figures 2, 3 et 4 représentent des vues en perspective illustrant le montage et le démontage d'un tel système.

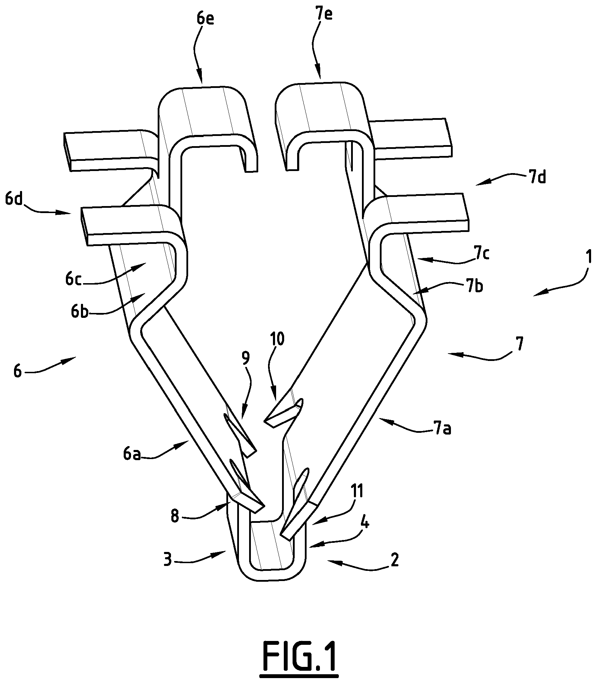

On a en effet illustré sur ces figures, un système de fixation de deux pièces l'une sur l'autre qui comporte un attache élastique désignée par la référence générale 1 sur la figure 1 et présentant la forme générale d'un V comportant une portion intermédiaire en forme de pince à deux branches, cette portion intermédiaire étant désignée par la référence générale 2 sur cette figure.

Les deux branches sont quant à elles désignées par les références générales 3 et 4.

Cette portion intermédiaire est adaptée comme cela sera décrit plus en détails par la suite, pour recevoir et/ou coopérer avec au moins une partie en saillie d'une première pièce. Par ailleurs, ces branches 3, 4 de la portion intermédiaire 2 de l'attache sont prolongées par des ailes latérales symétriques 6 et 7.

En fait, ces ailes latérales 6 et 7 sont munies de moyen d'accrochage à franchissement de point dur, sur un bord correspondant d'une seconde pièce afin d'accrocher les pièces l'une sur l'autre. Ces moyens seront décrits plus en détails par la suite.

Cette attache comporte également au niveau de la zone de jonction de chaque aile latérale 6, 7 et de chaque branche correspondante 3, 4 de la portion intermédiaire 2, au moins une découpe en forme de harpon s'étendant dans le prolongement de l'aile correspondante en direction de la portion intermédiaire de l'attache pour, comme cela sera décrit plus en détails par la suite, bloquer en position la partie en saillie de la première pièce dans cette portion intermédiaire en forme de pince à deux branches de l'attache.

Dans l'exemple de réalisation illustré, ces découpes en forme de harpon sont réalisées par des découpes des ailes latérales de l'attache.

Dans l'exemple illustré, quatre découpes en forme de harpon sont prévues et sont désignées par les références générales 8, 9, 10 et 11. Ces découpes sont réalisées de chaque côté de la portion intermédiaire et à partir de chaque aile latérale.

Par ailleurs et comme cela est illustré, chaque aile latérale 6 ou 7 présente à partir de la portion intermédiaire de l'attache, une portion inclinée vers l'extérieur de l'attache désignée par la référence générale 6a, 7a, une portion inclinée vers l'intérieur de l'attache 6b, 7b, une portion de réception du bord correspondant de la seconde pièce 6c, 7c, et enfin une portion de butée 6d, 7d. Ces portions de butée sont par exemple formées par deux languettes repliées à 90°vers l'extérieur de l'attache.

En fait ces différentes portions définissent les moyens de montage par encliquetage élastique de l'attache sur le bord correspondant de la seconde pièce permettant alors de bloquer l'attache en position sur le bord correspondant de la seconde pièce et d'engager plus ou moins profondément la partie en saillie de la première pièce dans la portion intermédiaire en forme de pince de l'attache lors de son montage, pour ajuster le montage des deux pièces l'une par rapport à l'autre.

Comme cela est également visible sur cette figure 1, les extrémités des ailes latérales 6, 7 de l'attache comportent également des surfaces de butée symétriques 6e 7e, adaptées pour venir en appui l'une contre l'autre en position de montage de l'attache sur la seconde pièce. Ces surfaces de butée sont également formées par exemple par des languettes repliées vers l'intérieur de l'attache.

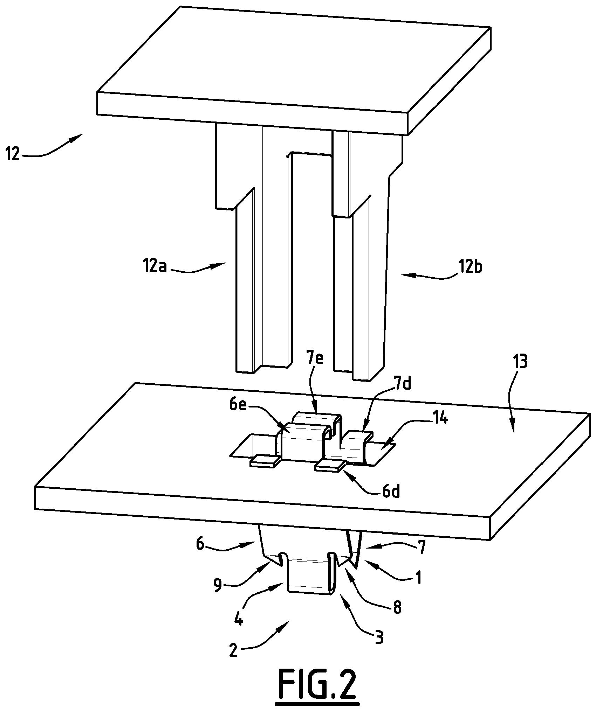

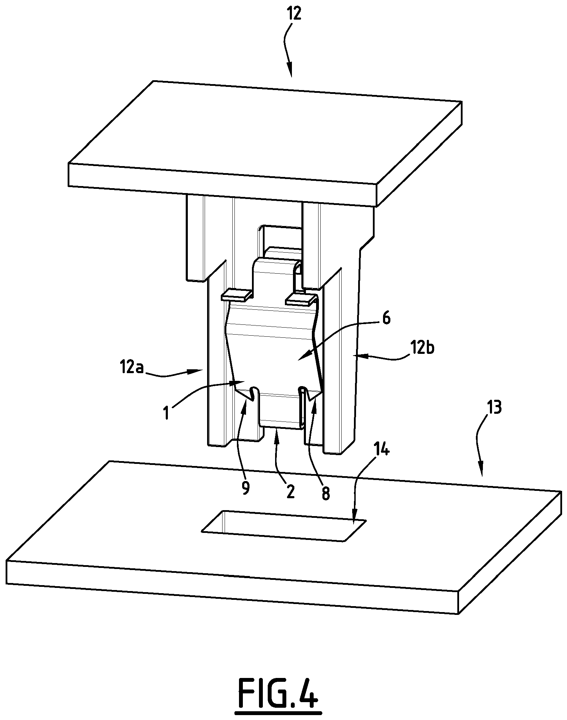

Les figures 2 à 4 illustrent le montage et le démontage d'un système de fixation selon l'invention.

On reconnaît en effet sur ces figures, l'attache décrite précédemment et désignée par la référence générale 1, une première pièce désignée par la référence générale 12 comportant deux parties en saillie respectivement 12a, 12b, et une deuxième pièce désignée par la référence générale 13 comportant par exemple une lumière désignée par la référence générale 14 dans laquelle est engagée l'attache élastique 1, cette attache élastique étant accrochée par encliquetage élastique de ses ailes latérales sur des bords correspondants en regard de cette lumière.

En effet, la première phase de montage d'un tel système consiste à engager l'attache en position et à la bloquer sur les bords de la lumière.

Ceci est réalisé par l'intermédiaire des moyens à franchissement de point dur des ailes latérales de l'attache, les bords correspondants de la lumière étant reçus dans les portions de réception correspondantes 6c, 7c de ces ailes pour assurer le blocage en position de l'attache.

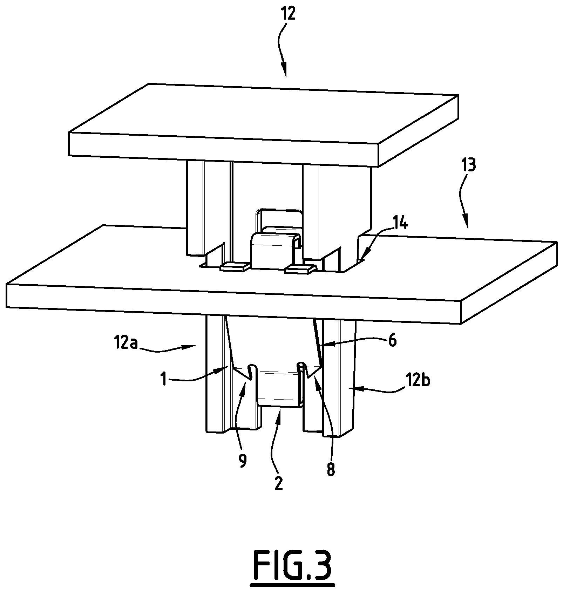

Comme cela est également illustré sur ces figures, les deux parties en saillie 12a, 12b de la première pièce 12 sont espacées et parallèles l'une à l'autre. Elles sont alors adaptées pour s'engager de part et d'autre des surfaces de butée 6e, 7e des extrémités des ailes latérales 6, 7 de l'attache et pour s'enfoncer comme cela est illustré en particulier sur la figure 3, entre les découpes en forme de harpon de la portion intermédiaire en forme de pince à deux branches de l'attache, afin de bloquer ces parties saillie et donc la seconde pièce par rapport à la première.

Une telle structure permet d'assurer un bon ajustement entre les deux pièces l'une par rapport à l'autre dans la mesure où les parties en saillie 12a, 12b de la première pièce 12 peuvent être engagées plus ou moins profondément dans la portion intermédiaire en forme de pince de l'attache lors de son montage, ce qui permet de rattraper d'éventuels jeux de montage.

De plus, lors d'un démontage éventuel des deux pièces l'une par rapport à l'autre, l'attache 1 reste bloquée en position sur les parties en saillie 12a, 12b de la première pièce 12 et se dégagent alors de la lumière 14 de la seconde pièce. Lors du remontage des deux pièces l'une sur l'autre, celles-ci retrouveront alors leur position initiale d'ajustement.

Il va de soi bien entendu que différents modes de réalisation de cette attache peuvent être envisagés. On notera également que celle-ci peut être réalisée par découpe et déformation d'un flan de tôle.

## Revendications

1. Ensemble comprenant deux pièces et un système de fixation des deux pièces l'une sur l'autre comportant une attache élastique (1) présentant la forme générale d'un V comportant une portion intermédiaire (2) en forme de pince à deux branches (3, 4), adaptée pour recevoir au moins une partie en saillie (12a, 12b) de la première pièce (12) et à partir des branches de laquelle s'étendent des ailes latérales (6, 7) munies de moyens d'accrochage à franchissement de point dur sur un bord correspondant de la seconde pièce (13) afin d'accrocher les pièces l'une sur l'autre et au niveau de la zone de jonction de chaque aile latérale (6, 7) et de la branche correspondante (3, 4) de la portion intermédiaire (12), au moins une découpe en forme de harpon (8, 9, 10, 11) s'étendant dans le prolongement de l'aile correspondante en direction de la portion intermédiaire, pour permettre de bloquer la portion intermédiaire de l'attache sur la première pièce, **caractérisé en ce que** les moyens d'accrochage des ailes latérales de l'attache comprennent des moyens de montage par encliquetage élastique de celle-ci sur le bord correspondant de la seconde pièce (13), permettant d'engager plus ou moins profondément la partie en saillie (12a, 12b) de la première pièce (12) dans la portion intermédiaire (2) en forme de pince de l'attache lors de son montage, pour ajuster le montage des deux pièces l'une par rapport à l'autre et **en ce que** les extrémités des ailes latérales (6, 7) de l'attache (1) comportent des surfaces de butée (6e, 7e) adaptées pour venir en appui l'une contre l'autre en position de montage de l'attache sur la seconde pièce.

2. Ensemble selon la revendication 1, **caractérisé en ce que** les découpes en forme de harpon (8, 9, 10, 11) sont réalisées par des découpes inclinées à partir des ailes latérales (6, 7) de l'attache.

3. Ensemble selon la revendication 1 ou 2, **caractérisé en ce qu'**elle comporte des ailes latérales symétriques (6, 7) à partir des branches (3, 4) de la portion intermédiaire (2).

4. Ensemble selon l'une quelconque des revendications précédentes, **caractérisé en ce que** chaque aile latérale présente, à partir de la portion intermédiaire (2) de l'attache, une portion inclinée vers l'extérieur de l'attache (6a, 7a), une portion inclinée vers l'intérieur de l'attache (6b, 7b), une portion de réception du bord correspondant de la seconde pièce (6c, 7c) et une portion de butée (6d, 7d).

5. Ensemble selon l'une quelconque des revendications précédentes, **caractérisé en ce que** la première pièce (12) comporte deux parties en saillie (12a, 12b) espacées et parallèles l'une à l'autre et adaptées pour s'engager de part et d'autre des surfaces de butée (6e, 7e) des extrémités des ailes latérales (6, 7) de l'attache et entre les découpes en forme de harpon (8, 9, 10, 11) de la portion intermédiaire de cette attache.

6. Ensemble selon l'une quelconque des revendications précédentes, **caractérisé en ce que** l'attache est réalisée par découpe et déformation d'un flan de tôle.

## Patentansprüche

1. Baugruppe, umfassend zwei Teile und ein System zur Befestigung der zwei Teile aufeinander, umfassend eine im Wesentlichen V-förmige elastische Befestigung (1) mit einem Zwischenteil (2) in Form einer Klemme mit zwei Zacken (3, 4), der geeignet ist, mindestens einen hervorstehenden Teil (12a, 12b) des ersten Teils (12) aufzunehmen, von dessen Zacken aus sich Seitenflügel (6, 7) mit Aufhängmittel mit einem Kreuzpunkt auf einer entsprechenden Kante des zweiten Teils (13), um die Teile aneinander auf der Ebene des Verbindungspunktes jedes Seitenflügels (6, 7) und der entsprechenden Zacke (3, 4) des Zwischenteils (12), mindestens einen harpunenförmigen Ausschnitt (8, 9, 10, 11), der sich über die Länge des entsprechenden Flügels in Richtung des Zwischenteils erstreckt, um den Zwischenteil der Befestigung auf dem ersten Teil zu befestigen, **dadurch gekennzeichnet, dass** die Aufhängmittel der Seitenflügel der Befestigung elastisch rastbare Montagemittel zur Befestigung des Zwischenteils auf der entsprechenden Kante des zweiten Teils (13) umfassen, was einen Eingriff des hervorstehendes Teils (12a, 12b) des ersten Teils (12) bis zu einer bestimmten Tiefe in den klemmenförmigen Zwischenteil (2) des Befestigungsmittel bei der Montage ermöglicht, um die Montage der zwei Teile relativ zueinander einzustellen, und dadurch, dass die Enden der Seitenflügel (6, 7) der Befestigungsmittel (1) Anschlagflächen (6e, 7e), die zur Anlehnung aneinander in der Montageposition auf dem zweiten Teil geeignet sind, umfassen.

2. Baugruppe nach Anspruch 1, **dadurch gekennzeichnet, dass** die harpunenförmigen Ausschnitte (8, 9, 10, 11) durch schräge Ausschnitte ab den Seitenflügeln (6, 7) der Befestigung ausgebildet sind.

3. Baugruppe nach Anspruch 1 oder 2, **dadurch gekennzeichnet, dass** sie symmetrische Seitenflügel (6, 7) umfasst, die von den Zacken (3, 4) des Zwischenteils (2) ausgehen.

4. Baugruppe nach einem der vorstehenden Ansprüche, **dadurch gekennzeichnet, dass** jeder Seitenflügel einen in Richtung der Außenseite der Befestigung (6a, 7a) abgeschrägten, vom Zwischenteil (2) ausgehenden Abschnitt, eine in Richtung der Innenseite der Befestigung (6b, 7b) abgeschrägten Abschnitt, einen Abschnitt zur Aufnahme der entsprechenden Kante des zweiten Teils (6c, 7c) und eines Anschlagabschnitts (6d, 7d) aufweist.

5. Baugruppe nach einem der vorstehenden Ansprüche, **dadurch gekennzeichnet, dass** der erste Teil (12) zwei hervorstehende Teile (12a, 12b) umfasst, die parallel und voneinander beabstandet sind und geeignet sind, in beide Anschläge (6e, 7e) der Enden der Seitenflügel (6, 7) der Befestigung und zwischen die harpunenförmigen Ausschnitte (8, 9, 10, 11) des Zwischenteils der Befestigung einzugreifen.

6. Baugruppe nach einem der vorstehenden Ansprüche, **dadurch gekennzeichnet, dass** die Befestigung durch Schneiden und Verformen eines Blechzuschnitts ausgebildet wird.

## Claims

1. Assembly comprising two components and a system for fixing the two components to each other comprising a resilient securing member (1) which is generally V-shaped and which comprises an intermediate portion (2) which is in the form of a clamp which has two arms (3, 4) and which is suitable for receiving at least a projecting portion (12a, 12b) of the first component (12) and from the arms of which lateral wings (6, 7) extend and are provided with engagement means for overcoming a snap-fit point on a corresponding edge of the second component (13) in order to engage the components with each other and in the region of the junction zone of each lateral wing (6, 7) and the corresponding arm (3, 4) of the intermediate portion (12), at least one harpoon-like cut-out (8, 9, 10, 11) extending in continuation of the corresponding wing in the direction of the intermediate portion, in order to allow the intermediate portion of the securing member to be fixed in position on the first component, **characterised in that** the engagement means of the lateral wings of the securing member comprise means for assembly by resilient snap-fitting thereof on the corresponding edge of the second component (13), allowing the projecting portion (12a, 12b) of the first component (12) to be engaged, to a greater or lesser depth, in the intermediate clamp-like portion (2) of the securing member during assembly thereof, in order to adjust the assembly of the two components relative to each other, and **in that** the ends of the lateral wings (6, 7) of the securing member (1) comprise abutment surfaces (6e, 7e) which are suitable for moving into abutment against each other in an assembly position of the securing member on the second component.

2. Assembly according to claim 1, **characterised in that** the harpoon-like cut-outs (8, 9, 10, 11) are constructed by cut-outs which are inclined so as to extend from the lateral wings (6, 7) of the securing member.

3. Assembly according to claim 1 or 2, **characterised in that** it comprises symmetrical lateral wings (6, 7) extending from the arms (3, 4) of the intermediate portion (2).

4. Assembly according to any one of the preceding claims, **characterised in that** each lateral wing has, extending from the intermediate portion (2) of the securing member, a portion (6a, 7a) which is inclined towards the outer side of the securing member, a portion (6b, 7b) which is inclined towards the inner side of the securing member, a portion (6c, 7c) for receiving the corresponding edge of the second component and an abutment portion (6d, 7d).

5. Assembly according to any one of the preceding claims, **characterised in that** the first component (12) comprises two projecting portions (12a, 12b) which are spaced apart from and parallel with each other and which are suitable for becoming engaged at one side and the other of the abutment surfaces (6e, 7e) of the ends of the lateral wings (6, 7) of the securing member and between the harpoon-like cut-outs (8, 9, 10, 11) of the intermediate portion of that securing member.

6. Assembly according to any one of the preceding claims, **characterised in that** the securing member is constructed by cutting and shaping a sheet metal blank.
